# EUROPEAN PATENT APPLICATION

(11) **EP 0 611 168 A2**
(43) Date of publication of application: **17.08.1994**
(21) Application number: 94301014.0
(22) Date of filing: 11.02.1994
(51) Int. Cl.: C12C 9/02

(54) **Hop extract and use thereof**

(30) Priority: 12.02.1993 JP 24492/93
(71) Applicant: SUNTORY LIMITED, Kita-ku, Osaka-shi, Osaka (JP)
(72) Inventor: Ono, Miyoki,, Osaka-shi, (JP); Kakudo, Yoichi,, Osaka, (JP); Oshita, Katsumi,, Osaka, (JP); Tsubakimoto, Yoshikazu,, Kakogawa-shi, Hyogo, (JP); Takahashi, Masakazu,, Kakogawa-shi, Hyogo, (JP); Nakayama, Kasuyuki,, Himeji-shi, Hyogo, (JP)
(74) Representative: Stoner, Gerard Patrick

(57) **Abstract**

There are provided a method of extracting essential oil-rich hop extract from hop, using supercritical or subcritical carbon dioxide as the solvent, the above mentioned essential oil-rich hop extract, and a product comprising a mixture of the hop extract and a hop extract residue. There is also provided a method of applying the product to the production of wort or beer. The extraction is carried out either in one stage controlling the pressure of the carbon dioxide in the extraction tank at 80 - 100 kg/cm², or performing the extraction at a pressure of over 100 kg/cm² and conducting the separation in two stages.

It is possible to produce beer having a pleasant, flowery hop fragrance and a refreshing, deep-bodied hop flavor.

## Description

The present invention relates to a process for the production of an essential oil-rich hop extract which is used in the production of beer, to a process for applying the above hop extract to the process of beer manufacture, and to a process for the production of beer.

Hops, one of the major raw ingredients of beer, are used to impart to beer its characteristic aroma and refreshingly bitter taste, and they are usually boiled together with wort during the beer manufacturing process, just prior to fermentation. When hops are boiled together with wort, the aroma-imparting essential oil components and refreshing bitterness-imparting bitter components contained therein are extracted into the wort, and these extracted components undergo continuous reactions involving thermal decomposition and heat isomerization, to produce wort having its characteristic aroma and bitter taste.

However, since raw hops undergo oxidative deterioration very readily making their preservation extremely difficult, and they also have a limited harvesting period, hops for use in the manufacture of beer are stored in the form of whole hops which have been dried after harvesting, or further processed hop flour, hop pellets, etc. Nevertheless, because even these dried hops are very readily deteriorated by oxidation and the products of the deterioration by oxidation give a deteriorated odor and rough taste to the beer, it is necessary to maintain a strict temperature and control over degassing during storage, and therefore recently attempt have been made to extract only the useful components from the hops, and use the extract in the manufacture of beer.

The components of hops which are desired for beer are largely classified into two components which impart a refreshingly bitter taste, represented by α-acid, and essential oil components which impart a characteristic aroma. Methods of extraction of the useful components from hops, considering the bitterness-imparting components, include extraction with organic solvent and extraction using, for example, carbon dioxide in a supercritical or subcritical state. Extraction with organic solvent has been accompanied by problems due to the simultaneous extraction of other components which have a detrimental influence on the beer, such as impairment of the color tone to the beer and the introduction of a rough taste thereto, and by other problems such as residue of the extraction solvent which is harmful to the human body, and quality deterioration and loss of the extract due to considerable heating required to evaporate the extraction solvent, for which reasons this method is not preferred. On the other hand, the method of extraction employing a supercritical or subcritical state is an effective method free of such problems as seen in the methods of extraction using organic solvents, and further research is being conducted regarding conditions for extraction, separation and fluids to be used which are most suited for the components desired to be extracted. For extraction employing a carbon dioxide supercritical or subcritical state, research is being conducted on methods for the specific extraction of the bitter components, and methods for the processing of products obtained by heat isomerization of the extracted components, as described, for example, in Japanese Patent Publication JP-A-55/45391, Japanese Patent Publication JP-A-61/1374, etc., but attention has not been concentrated on essential oil components which impart the aroma.

The components of hops include both bitter components and essential oil components which provide its aroma, but since it is not desirable to include more of the bitter components to the beer than are necessary, the amount of hops used in the manufacture of beer has been controlled using the bitter components as the basis. For example, there is commonly employed a method in which the α-acid content in the hops or the hop extract is determined, and then hop or hop extract is added to wort in an amount corresponding to a desired amount of α-acid. Attempts have been made to increase the amount of the hops or hop extracts in order to obtain more highly aromatic beer, but since this measure also increases the amount of the bitter components, the bitter taste becomes too strong and thus a satisfactory beer product cannot be obtained. Also, methods have also been tried in which hop or hop extracts, particularly those rich in essential oil components, is further added toward the end of the process of boiling of the wort, but a problem results due to the short boiling time after the addition in that no heat isomerization reaction occurs with the α-acid of the extract from the re-added hops, causing the beer to possess the undesirable bitter taste of the α-acid (a bitter taste which remains deep in the throat, usually referred to as an aftertaste). A method called dry-hopping has been tried wherein hops or hop extracts are further added after the boiling process and toward the end of fermentation, but this has been problematic in that there is little migration of the aromatic components from hops, and also the hops are not heated, which results in the presence of a strong grassy odor. In any case, the inconsistency of the contents of essential oil components due to various hop varieties and harvesting periods, variations in conditions of storage, and control of the boiling process, have resulted in huge differences in the contents of essential oil components in hops or hop extracts, and thus there has-been no fixed method for adding essential oil components to wort. Furthermore, since bitter components such as α-acid and the like is also present, it is desired to develop a method for the addition of essential oil components to wort without the influence of the bitter components.

In view of this goal, steam distillation has been considered as a method specifically extracting essential oil components in hops. However, this method has been accompanied by problems of degradation and loss of essential oil components due to the temperature of the extract as a result of the exceedingly strong heating effected during extraction. Improved methods of steam distillation under reduced pressure have been attempted, such as the one described, for example, in Japanese Patent Publication JP-A-50/157595, but they have not been very practical because their processes involve extremely complex procedures and complicated equipments, in addition to requiring long periods of time.

Furthermore, even in cases where the essential oil components alone have been obtained, there has been absolutely no research conducted regarding their application in the process of beer manufacturing. Since the essential oil components have low boiling points, if added in their obtained state during or prior to the usual wort boiling process they are easily dispersed and evolved by the heat of boiling, which results in their reduced migration to the wort, while if they are added after the boiling process they undergo practically no exposure to heat, resulting in almost no conversion or thermal decomposition of the essential oil components, and this leaves an undesirable strong grassy odor in the beer and also leads to insufficient migration of the aromatic components to the wort. Consequently, it is very difficult to control the addition of the essential oil components in order to obtain wort or beer with excellent aromaticity.

One object of the present developments is to provide a new process for producing hop extracts, preferably containing a large amount of specific essential oil components to impart aroma to beer, by an extraction method employing carbon dioxide in supercritical or subcritical state, and also to provide a process for production of beer with good aromaticity by utilizing the obtained essential oil components in an effective manner during the process of beer manufacturing.

We find that a method of obtaining hop extracts containing a large amount of specific essential oil components which impart aroma to hops (hereunder referred to as "essential oil-rich hop extract" or "essential oil extract") in which the extraction is carried out using supercritical or subcritical carbon dioxide as a solvent, may be accomplished by either (1) extracting the essential oil components with the pressure of the carbon dioxide in the extraction tank at 80 - 100 kg/cm² and then separating the essential oil extract in a separation tank at a pressure lower than the extraction pressure, or (2) extracting the essential oil components and the bitter components together at a pressure of over 100 kg/cm², and then separating the bitter components with the pressure in a first separation tank at lower than the extraction pressure but at 100 kg/cm² or higher, and subsequently separating the refined oil extract in a second separation tank with the pressure at lower than 100 kg/cm².

Accordingly in one aspect we provide a process for production of an essential oil-rich hop extract, comprising the steps of:
(1) extracting hops with supercritical or subcritical carbon dioxide solvent at a pressure of 80 to 100 kg/cm²; and
(2) separating an essential oil-rich hop extract from the carbon dioxide extract.

In another aspect we provide a process for production of an essential oil-rich hop extract, comprising the steps of:
(1) extracting hops with supercritical or subcritical carbon dioxide solvent at an extraction pressure of higher than 100 kg/cm² to obtain a carbon dioxide extract;
(2) separating bitter components from the carbon dioxide extract at a pressure between 100 kg/cm² and said extraction pressure; and then
(3) separating an essential oil-rich hop extract from the carbon dioxide extract at a pressure of lower than 100 kg/cm².

In a further aspect we provide an essential oil-rich hop extract obtainable by the steps of:
(1) extracting hops with supercritical or subcritical carbon dioxide solvent at a pressure of 80 to 100 kg/cm² to obtain a carbon dioxide extract; and
(2) separating an essential oil-rich hop extract from the carbon dioxide extract.

In a further aspect we provide an essential oil-rich hop extract obtainable by the steps of:
(1) extracting hops with supercritical or subcritical carbon dioxide solvent at an extraction pressure of higher than 100 kg/cm² to obtain a carbon dioxide extract;
(2) separating bitter components from the carbon dioxide extract at a pressure between 100 kg/cm² and said extraction pressure; and then
(3) separating an essential oil-rich hop extract from the carbon dioxide extract at a pressure of lower than 100 kg/cm².

A further aspect is a product comprising:
(A) an essential oil-rich hop extract obtainable by the steps of:
   (1) extracting hops with supercritical or subcritical carbon dioxide solvent at a pressure of 80 to 100 kg/cm² to obtain a carbon dioxide extract and a hop extract residue; and
   (2) separating an essential oil-rich hop extract from the carbon dioxide extract; and
(B) said hop extract residue.

A further aspect is a product comprising:
(A) an essential oil-rich hop extract obtainable by the steps of:
   (1) extracting hops with supercritical or subcritical carbon dioxide solvent at an extraction pressure of higher than 100 kg/cm² to obtain a carbon dioxide extract and a hop extract residue;
   (2) separating bitter components from the carbon dioxide extract at a pressure between 100 kg/cm² and said extraction pressure; and then
   (3) separating an essential oil-rich hop extract from the carbon dioxide extract at a pressure of lower than 100 kg/cm²; and
(B) said hop extract residue.

A further aspect is a process for production of a highly aromatic wort comprising the steps of:
(1) adding an above-mentioned product to a wort; and
(2) maintaining the wort containing said product at a temperature of at least 95°C for at least 10 minutes.

The present invention also provides a process for production of a wort comprising the steps of:
(1) adding an above-mentioned product to a wort during the step of boiling the wort; and
(2) further boiling the wort containing said product for at least 4 minutes.

A further aspect is a process for production of a highly aromatic wort comprising the steps of:
(1) adding an above-mentioned product to a wort after boiling the wort during the whirlpool rest step ; and
(2) maintaining the wort containing said mixture at a temperature of at least 95°C for at least 10 minutes.

In the above-mentioned processes for production of a wort, the weight ratio of the essential oil-rich hop extract: the hop extract residue is preferably 1:1 to 1:3.

A further aspect is a process for production of a wort comprising the steps of:
(1) extracting hops with a supercritical or subcritical carbon dioxide solvent to obtain a carbon dioxide extract and a hop extract residue;
(2) separating a hop extract from the carbon dioxide extract;
(3) mixing the hop extract and the hop extract residue to obtain a product;
(4) adding the product from step (3) to a wort; and
(5) maintaining the wort containing said product at a temperature of at least 95°C for at least 10 minutes.

A further aspect is a process for production of a wort comprising the steps of:
(1) extracting hops with a supercritical or subcritical carbon dioxide solvent to obtain a carbon dioxide extract and a hop extract residue;
(2) separating a hop extract from the carbon dioxide extract;
(3) mixing the hop extract and the hop extract residue to obtain a product;
(4) adding the product from step (3) to a wort during the wort boiling; and
(5) further boiling the wort containing the product for at least 4 minutes.

A further aspect is a process for production of a wort comprising the steps of:
(1) extracting hops with a supercritical or subcritical carbon dioxide extract to obtain a carbon dioxide extract and a hop extract residue;
(2) separating a hop extract from the carbon dioxide extract;
(3) mixing the hop extract and the hop extract residue to obtain a product;
(4) adding the product from step (3) to a wort after the wort boiling during the whirlpool rest; and
(5) maintaining the wort containing the product at a temperature of at least 95°C for at least 10 minutes.

In the above-mentioned processes for production of a wort, the weight ratio of the hop extract: hop extract residue is preferably 1:2 to 1:5.

The present invention still more provides a process for production of beer characterized by using a wort obtainable by any one of the above-mentioned processes.

Normally, when extraction from hops is carried out using supercritical or subcritical carbon dioxide as the solvent, the pressure of the carbon dioxide in the extraction tank is usually 60 - 400 kg/cm², and the temperature is in a range of 20 - 100°C, while in the separation tank, the pressure is 20 - 150 kg/cm² and the temperature is in a range of 20 - 100°C. In the first method, the extraction from the hops is controlled by maintaining the pressure of the carbon dioxide in the extraction tank in a range of 80 - 100 kg/cm², to obtain a hop extract containing a large amount of specific essential oil components. Here, the conditions of the separation tank are not restricted so long as the pressure is lower than that in the extraction tank, but from the point of view of separation efficiency, a pressure in the range of 20 - 50 kg/cm² is preferred. In the other method the extraction is performed at a pressure greater than 100kg/cm² but preferably less than 400 kg/cm², and in the first separation tank the bitter components are separated with the separation pressure lower than the extraction pressure but at 100 kg/cm² or higher, and then the pressure of the second separation tank is kept at lower than 100 kg/cm², and preferably in range of 20 - 50- kg/cm², by which an extract containing a large amount of specific essential oil components may be separated in the second separation tank. Needless to mention, the bitter components separated and extracted in the first separation tank may be effectively used to impart bitterness to the beer. In both methods, the temperature may be selected within the range of normal conditions.

The hop extract contains a large amount of specific essential oil components which impart aroma to beer refers to one in which the ratio of essential oil components (ml) to α-acid (g) in the original hops is increased by preferably at least 2. The proportion is particularly preferably increased by at least 4. Particularly, if the ratio is increased by least 4, then the addition of the essential oil extract may be performed without consideration of the amount of the α-acid copresent therewith.

The hops to be used for the extraction may be dried hops including for example whole hops, hop flour, hop pellets and the like, and from the point of view of extraction efficiency, these are preferably grinded for use. Furthermore, the hop extract residue to be used as a component of the essential oil-containing product described hereunder is preferably grinded for use in the extraction.

The method of effectively using the obtained essential oil components in the manufacture of beer may be carried out by adding to wort a product prepared by introducing the above mentioned essential oil-rich extract into a hop extract residue obtained via the process of extraction of hops using supercritical or subcritical carbon dioxide as the solvent (hereunder referred to as "product containing essential oil components").

If the essential oil extract is added in its obtained state to the wort during the boiling process, then it will volatilize by steam distillation because of the low boiling temperature of the components, and there will be practically no migration thereof to the wort. We, the present inventors, have completed the present invention upon the discovery that when the addition is performed using a product comprising a mixture of essential oil components and hop extract residue (product containing essential oil components), the aromatic components are caused to migrate efficiently and effectively to the wort. When added in the form of the product containing essential oil components, the essential oil components gradually migrate therefrom to the wort. Also, although most components with extremely low boiling points disperse immediately, a number of components dissolve in the wort without being volatized, and further, upon heating the essential oil components lose their grassy odor which is undesirable for beer, making it possible to obtain wort having a desirable flowery hoppy aroma, which is desirable for beer. Furthermore, the hop extract residue contains almost no components which adversely affect the beer, if at all only in very minute amounts, and thus there is almost no migration of these to the wort within the short time in which the process of boiling the wort is carried out. Consequently, the above mentioned "the product containing essential oil components" according to the present specification refers to a combination of essential oil components and hop extract residue in a state which exhibits the effects described above.

The hop extract residue results from the extraction with subcritical or supercritical carbon dioxide, and it is not restricted so long as the essential oil components and the bitter components are almost completely removed therefrom, and may be used as drawn out from the extractor.

Few or no products which may adversely affect the beer result in the extract residue during the extraction process, and the extraction solvent carbon dioxide is not only harmless, but also has a bacteriostatic or sterilizing effect. In addition, hops, one of main ingredients of beer, are added during the wort boiling and then transudated after the whirlpool rest in the conventional process of beer manufacturing, but the hop extract residue according to the present invention is sometimes added to the wort in exactly the same manner, and not only is there little or no adverse effect caused by the addition of the hop extract residue, such as changes in the flavor of the wort or generation of the deteriorating flavor, but there is also little or no problem at all with the raw materials and production steps, etc. which may be used for beer and are strictly prescribed in the process of beer manufacturing, nor with the strong tendency of producers to avoid the use of ingredients other than malts, hops, water, and secondary raw materials.

The introduction of the essential oil extract into the hop extract residue may simply be carried out by mixing them together. For a more homogeneous mixture, it is preferable to carry out the mixing with the essential oil extract in a liquid state. The essential oil extract may be obtained in a liquid state by heating at around 40°C. If for the mixing method there is employed, for example, a stirrer/kneader such as a homogenizer, a good quality product may be easily obtained. The mixing ratio of the essential oil extract to the hop extract residue is preferably in a range of 1:1 to 1:3 in terms of weight ratio. If the proportion of the hop extract residue is less than 1 with respect to the essential oil extract, then total introduction of the essential oil component can be difficult, and it will tend to evaporate by the heat during the wort boiling. Furthermore, if the proportion is somewhat over 3, then there will be little or no problem at all with migration to the wort. Also, if the proportion is extremely large, then problems will result such as greater time required for the elution of the essential oil components from the product containing essential oil components, thus complicating control of the process.

The product containing essential oil components may be added to the wort at any time during the processes of wort boiling or whirlpool rest. Since the wort boiling process is for heating for migration of essential oil components to the wort and elimination of the grassy odor of the essential oil components, it is preferably maintained for between 4 and 15 minutes. If the heating time is less than 4 minutes some of the grassy odor may remain. If it is over 4 minutes there is little or no but heating for a long period of time is not only uneconomical, but excessively long heating may lead to reduction of the flowery hoppy aroma components. The whirlpool rest process is carried out maintaining the temperature at 95°C or above, for example 95°C to 100°C, for 10 minutes or more, for example 10 to 30 minutes. The whirlpool rest process, a process usually carried out during the manufacture of beer, is effected for the purpose of removing thermocoagulated substances such as proteins from the wort, and in this process the boiled wort is transferred to a tank called a whirlpool, and the wort, which was at a temperature of about 103°C during boiling, is kept in the whirlpool tank at a temperature of around 95°C or lower, for 30 - 60 minutes. If the temperature is in a range which does not cause boiling, an excessively long heating time may result in reduction of the flowery hoppy aroma components, but the length of the preservation time is not particularly limited. If it is desired to strengthen the flowery fragrance of the hopes then heat will be required for thermal decomposition, and therefore it is preferably added during the boiling process or at the end of the boiling process. If some grassy odor is desired, then the composition is preferably added during the whirlpool rest process. The methods make use of the wort boiling process or the whirlpool rest process as in the conventional method of beer manufacturing, while the other processes may be carried out completely by, for example, conventional methods without any changes or additions to the same processes in conventional beer manufacturing, and thus they also have high industrial utility value.

The methods use as essential oil-rich hop extract extracted from hops using supercritical or subcritical carbon dioxide as the solvent, but common hop extracts, particularly essential oil components or essential oil-rich extracts which are obtained by other methods, may also be mixed with a hop extract residue and added quite effectively.

The product containing essential oil components heightens the aromaticity of the wort or beer, and the bitter components are provided either by adding hops to the wort and boiling as usual, or by adding a bitter components extract from hop extract or hops. In the beer production method using this wort the resulting beer also has a refreshing hop flavor and pleasant flowery hop fragrance.

### EXAMPLES

A more detailed description of the present invention is provided below with reference to the Examples, but the present invention is not limited to these Examples.

### Examples 1 (Example 1 of extraction of essential oil-rich hop extract)

Extraction of hop was performed using a 50-liter extraction tank. The extraction tank was filled with 15 kg of grinded hop pellets, and supercritical carbon dioxide was used for extraction in the extraction tank at a pressure of 93 kg/cm² and a temperature of 42°C, and then extract separation was carried out in a separation tank at a pressure of 50 kg/cm² and a temperature of 40°C. After circulating the carbon dioxide for about one hour, 160g of a yellowish-green hop extract A was obtained in the separation tank.

### Comparison

Using 15 kg of the same type of hop pellets in the same tank under the same conditions except for changing the pressure in the extraction tank to 220 kg/cm², the carbon dioxide was circulated for about 3 hours and extract separation was performed to obtain 1.5 kg of a green hop extract B. The α-acid, β-acid and essential oil component contents of the raw hop pellets and the extracts A and B were measured. The results are shown in Table 1. The measurement of the α-acid and β-acid contents was carried out according to the method of M. Ono, et at. described in "J. Am. Soc. Brew. Chem.", 45, 70, 1987, and the measurement of the essential oil component content according to the method of Ronald J. Burkhardt, "J. Am. Soc. Brew. Chem.", 44, 38, 1986.

**Table 1 -**

| α-acid, β-acid and essential oil contents of raw hop pellets and extracts A and B | | | |
|---|---|---|---|
| | Raw hop pellets | Extract A | Extract B |
| α-acid (g) | 582.0 | 58.25 | 580.00 |
| β-acid (g) | 486.00 | 50.50 | 485.00 |
| Essential oil components (ml) | 123 | 86 | 120 |
| Essential oil components (ml)/α-acid (g) | 0.21 | 1.48 | 0.21 |

### Example 2 (Example 2 of extraction of essential oil-rich hop extract)

Extraction of hop was performed using a 50-liter extraction tank. The extraction tank was filled with 15 kg of grinded hop pellets, and supercritical carbon dioxide was used for extraction in the extraction tank at a pressure of 200 kg/cm² and a temperature of 42°C, circulating the carbon dioxide for about 5 hours, and separation was carried out in a two-stage manner, in the first separation tank at a pressure of 105 kg/cm² and a temperature of 40°C, and the second separation tank at a pressure of 50 kg/cm² and a temperature of 40°C. In the first separation tank there was obtained 1.25 kg of a green hop extract C (pressure 105 kg/cm²), and in the second separation tank there was obtained 250g of a somewhat light-green hop extract D (pressure 50 kg/cm²).

The α-acid, β-acid and essential oil component contents of the raw hop pellets and the extracts C and D were measured. The measurement was conducted in the same manner as in Example 1. The results are shown in Table 2.

**Table 2 -**

| α-acid, β-acid and essential oil component contents of raw hop pellets and extracts C and D | | | |
|---|---|---|---|
| | Raw hop pellets | Extract C | Extract D |
| α-acid (g) | 554 | 380 | 170 |
| β-acid (g) | 486 | 283 | 203 |
| Essential oil components (ml) | 155 | 30 | 123 |
| Essential oil components (ml)/α-acid (g) | 0.28 | 0.07 | 0.66 |

### Example 3 (Example 1 of addition of essential oil-rich hop extract to wort)

A 300g portion of the essential oil-rich hop extract A obtained in Example 1 was heated to 40°C, and added to 450g of the hop extract residue obtained in Example 1, and these were thoroughly mixed to obtain a product containing essential oil components. Three liters of boiled wort obtained by a conventional method was heated to 100°C, immediately after which 50 mg of the product containing essential oil components including the extract A was added thereto, and the wort was kept at 95°C or above for 30 minutes, and then rapidly cooled to 10°C. This produced a cooled wort E. Also, the product containing essential oil components was added to a boiled wort in the same manner, and after continuing the boiling for 5 minutes and 15 minutes and keeping the wort at 95°C or above for 30 minutes, they were rapidly cooled to 10°C. This produced cooled wort F (5 minute boiling) and G (15 minute boiling), respectively. As a control was used a cooled wort prepared by heating a boiled wort to 100°C in the same manner, keeping the wort at 95°C and above for 30 minutes, and rapidly cooling it to 10°C. The α-acid, iso-α-acid and essential oil contents of the cooled wort E, F and G and the control were measured, and an organoleptic evaluation was made of the hop fragrance of the cooled wort. The measurement was conducted in the same manner as in Example 1. The essential oil component was measured using as an index Linalool in essential oil components detected in the wort. The measurement of Linalool was conducted according to the method of M. Ono, et al. described in "J. Am. Soc. Brew. Chem.", 45, 61, 1987. An organoleptic evaluation was performed by 5 beer specialists. A result is shown in Table 3.

**Table 3 -**

| Iso-α-acid, α-acid and essential oil component contents and organoleptic evaluation of cooled worts E, F, G and control | | | | |
|---|---|---|---|---|
| | Control | Cooled wort E | Cooled wort F | Cooled wort G |
| iso-α-acid (ppm) | 37.9 | 37.8 | 37.9 | 38.2 |
| α-acid (ppm) | 10.9 | 10.8 | 11.4 | 11.0 |
| Essential oil (ppb) | 3 | 46 | 30 | 15 |
| Organoleptic evaluation (hop fragrance) | None | Strong aroma, very grassy odor | Flowery hop fragrance. No grassy odor | Some hop fragrance |

### Example 4 (Example of production of beer from the wort to which the product containing essential oil)

A 10g portion of the extract A obtained in Example 1 was mixed with 15g of the hop extract residue obtained in Example 1 to obtain a product containing essential oil. A 1.5g portion of this product containing essential oil was added to 100 liters of wort to which bitterness had been imparted by addition thereto of hops as well as by a conventional method, at 5 minutes before the end of boiling, and after whirlpool rest according to a conventional method, the clear hot wort was decanted from the whirlpool tank and followed by passing a plate cooler to obtain the cooled wort. This was designated as cooled wort H. In the same manner, 18.7g of the extract B obtained in Example 1 (Comparative Example) was added to 100 liters of wort to which bitterness had been imparted by addition of hop thereto, and the wort was treated in the same manner as described above to obtain cooled wort J. As a control was used a mixture prepared by adding 100g of the grinded hop pellets used in Example 1 to 100 liters of wort to which bitterness had been imparted by the addition of hop, and treating the wort in the same manner as described above. Beer was produced from these wort by a conventional method of beer manufacture. The iso-α-acid, α-acid and essential oil components contents of the wort and obtained beer were measured. The measurement was conducted in the same manner as in Example 1 or Example 3. A result is shown in Table 4. Also, an organoleptic evaluation of the obtained beer was conducted by 5 well experienced panelists. A result is shown in Table 5.

**Table 4 -**

| Iso-α-acid, α-acid and essential oil component contents of worts and obtained beer using cooled worts H, J and control | | | | | |
|---|---|---|---|---|---|
| | | Control | Cooled wort H | Cooled wort J | |
| Cooled worts | iso-α-acid (ppm) | 31.2 | 30.2 | 30.5 | |
| | α-acid (ppm) | 11.8 | 8.6 | 9.5 | |
| | Essential oil (ppb) | 40.0 | 32.2 | 5.1 | |
| Obtained beer | iso-α-acid (ppm) | 20.4 | 22.5 | 23.5 | |
| | α-acid (ppm) | 1.27 | 0.71 | 0.93 | |
| | Essential oil (ppb) | 32 | 28.7 | 4.0 | |

**Table 5 -**

| Organoleptic evaluation of obtained beer using cooled worts H, J and control | | | |
|---|---|---|---|
| | Control | Cooled wort H | Cooled wort J |
| Hop fragrance | Strong, but grassy. Medecine-like odor. | Flowery pleasant fragrance. | None |
| Hop flavor | Grassy taste. Very bad aftertaste. | Deep body | None. Somewhat bad aftertaste. |
| Average preference rating | 3 | 1 | 2 |
| Number of panelists evaluating as most excellent | 0 | 5 | 0 |

In a method of obtaining hop extract using supercritical or subcritical carbon dioxide as the solvent, if the pressure of the subcritical or supercritical carbon dioxide is set to 80 - 100 kg/cm², it is possible to obtain a hop extract which contains a large amount of essential oil components which impart aromaticity to the beer. Alternatively, the hop may be extracted by first extracting the bitter components and the essential oil components together with the extraction pressure at over 100 kg/cm², and performing separation in two stages comprising the removal of the bitter components in a first separation tank followed by obtaining a hop extracts in a second separation tank. The extracts obtained by the methods contains a large amount of essential oil in proportion to the bitter components. As a result, the amount of essential oil to be added to the wort or beer may be determined with disregard to the slightly present bitter components, making it possible to control the aromaticity of the beer.

Furthermore, by adding to wort a product comprising a mixture of essential oil extract and hop extract residue (product containing essential oil components), the efficient and effective migration of the hoppy aromatic components to the wort is made possible. Due to the interaction between the essential oil extract and the hop extract residue, when the product containing essential oil components is added to the wort, the essential oil components gradually migrate to the wort from the product containing essential oil components, with no dispersion of the essential oil components due to heat, making it possible to obtain highly aromatic wort. The mixing ratio of the essential oil extract and the hop extract residue in the composition is preferably in a range of 1:1 to 1:3 in terms of weight ratio. The hop extract residue may be used as drawn out from the extractor, with no further processing, and it is necessarily obtained by the extraction of the essential oil components, and it is not only unnecessary to add fresh materials but a by-product which is usually discarded may be used, and therefore the method is highly economical. Furthermore, few or no substances are produced in the hop extract residue during the extraction process which residue otherwise would adversely affect the beer, and the extraction solvent carbon dioxide is not only harmless, but also has a bacteriostatic or sterilizing effect. In addition, hops, one of the main ingredients of beer, are added during the boiling of the wort and decanted off after the whirlpool rest after boiling in the conventional process of beer manufacturing, but the hop extract residue according to the present invention is sometimes added to the wort in exactly the same manner, and not only is there little or no adverse effect caused by the addition of the hop extract residue, such as changes in the flavor of or deterioration of the wort, but there is also little or no problem at all with the raw materials and production steps, etc. which may be used for beer and are strictly prescribed in the process of beer manufacturing, nor with the strong tendency of producers to avoid the use of ingredients other than malts, hops, water, and secondary raw material.

By adding the product containing essential oil to a wort during the wort boiling process or at the whirlpool rest process, the efficient and effective migration of the aromatic components to the wort is made possible. These processes are part of the conventional method of beer manufacturing, and the other processes may be carried out without any changes or additions of steps, and thus high industrial utility value is also provided. The methods use an essential oil-rich hop extract extracted from hops using supercritical or subcritical carbon dioxide as the solvent, but common hop extracts, particularly essential oil or essential oil-rich extracts which are obtained by other methods, may also be mixed with a hop extract residue and added quite effectively.

Furthermore, beer obtained using the wort obtained in this manner in the conventional method of beer manufacturing has a pleasant, flowery hop fragrance, while there is little or none of the undesirable strong grassy odor from the hops or the bitterness deep in the throat caused by α-acids, and therefore beer may be obtained with a refreshing, deep-bodied hop flavor.

## Claims

1. A process for production of an essential oil-rich hop extract, comprising the steps of:
(1) extracting hops with supercritical or subcritical carbon dioxide solvent at a pressure of 80 to 100 kg/cm² to obtain a carbon dioxide extract; and
(2) separating an essential oil-rich hop extract from the carbon dioxide extract.

2. A process for production of an essential oil-rich hop extract, comprising the steps of:
(1) extracting hops with supercritical or subcritical carbon dioxide solvent at an extraction pressure of higher than 100 kg/cm² to obtain a carbon dioxide extract;
(2) separating bitter components from the carbon dioxide extract at a pressure between 100 kg/cm² and said extraction pressure; and then
(3) separating an essential oil-rich hop extract from the carbon dioxide extract at a pressure of lower than 100 kg/cm².

3. An essential oil-rich hop extract obtainable by the steps of:
(1) extracting hops with supercritical or subcritical carbon dioxide solvent at a pressure of 80 to 100 kg/cm² to obtain a carbon dioxide extract; and
(2) separating an essential oil-rich hop extract from the carbon dioxide extract.

4. An essential oil-rich extract obtainable by the step of:
(1) extracting hops with supercritical or subcritical carbon dioxide solvent at an extraction pressure of higher than 100 kg/cm² to obtain a carbon dioxide extract;
(2) separating bitter components from the carbon dioxide extract at a pressure between 100 kg/cm2 and said extraction pressure; and then
(3) separating an essential oil-rich hop extract from the carbon dioxide extract at a pressure of lower than 100 kg/cm².

5. A product comprising:
(A) an essential oil-rich hop extract obtainable by the steps of:
(1) extracting hops with supercritical or subcritical carbon dioxide solvent at a pressure of 80 to 100 kg/cm² to obtain a carbon dioxide extract and a hop extract residue; and
(2) separating an essential oil-rich hop extract from the carbon dioxide extract; and
(B) said hop extract residue.

6. A product comprising:
(A) an essential oil-rich hop extract obtainable by the steps of:
(1) extracting hops with supercritical or subcritical carbon dioxide solvent at an extraction pressure of higher than 100 kg/cm² to obtain a carbon dioxide extract and a hop extract residue;
(2) separating bitter components from the carbon dioxide extract at a pressure between 100 kg/cm² and said extraction pressure; and then
(3) separating an essential oil-rich hop extract from the carbon dioxide extract at a pressure of lower than 100 kg/cm²; and
(B) said hop extract residue.

7. A process for production of a highly aromatic wort comprising the steps of:
(1) adding a product according to claim 5 to a wort; and
(2) maintaining the wort containing the above-mentioned product at a temperature of at least 95°C for at least 10 minutes.

8. A process according to claim 7 wherein weight ratio of the essential oil-rich hop extract: the hop extract residue is 1:1 to 1:3.

9. A process for production of a highly aromatic wort comprising the steps of:
(1) adding a product according to claim 5 to a wort during the step of the wort boiling; and
(2) further boiling the wort containing the above-mentioned product for at least 4 minutes.

10. A process according to claim 9, wherein weight ratio of the essential oil-rich hop extract: the hop extract residue is 1:1 to 1:3.

11. A process for production of a highly aromatic wort comprising the steps of:
(1) adding a product according to claim 5 to a wort after the wort boiling during the whirlpool rest step; and
(2) maintaining the wort containing the product at a temperature of at least 95°C for at least 10 minutes.

12. A process according to claim 11, wherein weight ratio of the essential oil-rich hop extract: the hop extract residue is 1:1 to 1:3.

13. A process for production of a highly aromatic wort comprising the steps of:
(1) extracting hops with a supercritical or subcritical carbon dioxide solvent to obtain a carbon dioxide extract and a hop extract residue;
(2) separating a hop extract from the carbon dioxide extract;
(3) mixing the hop extract and the hop extract residue to obtain a product;
(4) adding the product from step (3) to a wort; and
(5) maintaining the wort containing the product at a temperature of at least 95°C for at least 10 minutes.

14. A processes according to claim 13, wherein weight ratio of the hop extract: the hop extract residue is 1:2 to 1:5.

15. A process for production of a highly aromatic wort comprising the steps of:
(1) extracting hops with a supercritical or subcritical carbon dioxide solvent to obtain a carbon dioxide extract and a hop extract residue;
(2) separating a hop extract from the carbon dioxide extract;
(3) mixing the hop extract and the hop extract residue to obtain a product;
(4) adding the product from step (3) to a wort during the wort boiling; and
(5) further boiling the wort containing the product for at least 4 minutes.

16. A process according to claim 15, wherein weight ratio of the hop extract: the hop extract residue is 1:2 to 1:5.

17. A process for production of a highly aromatic wort comprising the steps of:
(1) extracting hops with a supercritical or subcritical carbon dioxide extract to obtain a carbon dioxide extract and a hop extract residue;
(2) separating a hop extract from the carbon dioxide extract;
(3) mixing the hop extract and the hop extract residue to obtain a product;
(4) adding the mixture from step (3) to a wort after the wort boiling during the whirlpool rest; and
(5) maintaining the wort containing the product at a temperature of at least 95°C for at least 10 minutes.

18. A process according to claim 17, wherein weight ratio of the hop extract: hop extract residue is 1:2 to 1:5.

19. A process for production of highly aromatic beer characterized by using a wort obtainable according to any one of claims 7 to 18.
